(19) Europäisches Patentamt
European Patent Office
Office européen des brevets

(11) **EP 2 143 346 A1**

(12) **EUROPEAN PATENT APPLICATION**

(43) Date of publication:
**13.01.2010 Bulletin 2010/02**

(51) Int Cl.:
*A24F 13/00* (2006.01)　　*A24F 47/00* (2006.01)
*G01F 1/69* (2006.01)

(21) Application number: **08252328.3**

(22) Date of filing: **08.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Philip Morris Products S.A.**
**2000 Neuchâtel (CH)**

(72) Inventor: **The designation of the inventor has not yet been filed**

(74) Representative: **Bradford, Victoria Sophie**
**Reddie & Grose**
**16 Theobalds Road**
**London**
**WC1X 8PL (GB)**

(54) **A flow sensor system**

(57)　　There is provided a flow sensor system for sensing fluid flow indicative of a puff in an aerosol generating system. The sensor system includes a sensing circuit comprising a sensing resistor and a voltage output. The sensing resistor is arranged to detect fluid flow based on a change in resistance. The sensing circuit is arranged such that the change in resistance of the sensing resistor causes a change in the voltage output. The sensor system also includes a signal generator for supplying a pulsed driving signal to the sensing circuit. The sensor system is arranged to operate in a first mode in which the pulsed driving signal has a first frequency, and a second mode in which the pulsed driving signal has a second frequency, greater than the first frequency.

**Fig. 1**

EP 2 143 346 A1

**Description**

The present invention relates to a flow sensor system. Particularly, but not exclusively, the present invention relates to a flow sensor system for an aerosol generating system. The present invention finds particular application as a flow sensor system for a smoking system, for example an electrically heated smoking system.

A number of prior art documents, for example US-A-5 060 671, US-A-5 388 594, US-A-5 505 214, US-A-5 591 368, WO-A-2004/043175, EP-A-0 358 002, EP-A-0 295 122, EP-A-1 618 803, EP-A-1 736 065 and WO-A-2007/131449, disclose electrically operated smoking systems, having a number of advantages. One advantage is that they significantly reduce sidestream smoke, while permitting the smoker to selectively suspend and reinitiate smoking.

Aerosol generating systems of the prior art may include an aerosol-forming substrate, one or more heating elements for heating the substrate to form the aerosol, and a power supply to supply power to the one or more heating elements. The aerosol generating systems of the prior art may provide an energy pulse to the heater to provide the temperature range desired for operation and to release the volatile compounds for each puff. Many of the aerosol generating systems of the prior art include a flow sensor for sensing fluid flow (for example airflow or aerosol flow) in the aerosol generating system. The sensor may have an important role in managing the aerosol delivery. When the flow sensor senses airflow indicative of suction caused by the user taking a puff, an aerolization mechanism, which may include the heating element or elements, or any type of atomizer, is activated to provide the aerosol for that puff. The flow sensor may be a passive (that is, mechanical) sensor or an active sensor.

Passive sensors typically include a displacement membrane and an electrical contact. The airflow created by the user's suction displaces the membrane so that it touches the electrical contact, which activates the aerolization mechanism. As long as the airflow is strong enough to maintain the displacement of the membrane, the aerolization mechanism will remain activated. The advantages of a passive sensor include the simplicity of design, the consequent low cost, and the negligible energy consumption. Active sensors are often based on heat loss as a result of the fluid flow. This type of active sensor is often referred to as a thermal anemometer. The sensor comprises a resistor which is heated to a high temperature. When the flow cools the resistor, the consequent decrease in temperature for a given power, or increase in power to maintain a given temperature, indicates the air flow velocity. The resistor is typically a silicon micro-electro-mechanical systems (MEMS) based resistor. The advantages of an active sensor include the fact that the heat loss is proportional to flow velocity so the sensor can be used to provide information on puff characteristics. In addition, the sensor is not so affected by mechanical shocks during transportation and handling.

Because the flow sensors provided in the aerosol generating systems of the prior art, including those described above, do have a number of disadvantages, it is an object of the invention to provide an improved flow sensor system, suitable for an aerosol generating system.

According to a first aspect of the invention, there is provided a flow sensor system for sensing fluid flow indicative of a puff in an aerosol generating system, the sensor system comprising: a sensing circuit comprising a sensing resistor and a voltage output, the sensing resistor being arranged to detect fluid flow based on a change in resistance, the sensing circuit being arranged such that the change in resistance of the sensing resistor causes a change in the voltage output; and a signal generator for supplying a pulsed driving signal $S_1$ to the sensing circuit, wherein the sensor system is arranged to operate in a first mode in which the pulsed driving signal $S_1$ has a first frequency $f_1$, and a second mode in which the pulsed driving signal $S_1$ has a second frequency $f_2$, greater than the first frequency $f_1$.

Because the sensor system includes a sensing resistor incorporated into a sensing circuit, which has an output voltage that is a difference voltage, the sensitivity is high and small changes in the flow can be detected. The use of a pulsed driving signal $S_1$ means that the sensing circuit is not powered constantly, but is only powered whenever the pulsed driving signal $S_1$ is high, that is, when the square-wave signal $S_1$ is 1, rather than 0. This significantly reduces power consumption. The sensor system can be constantly active, which means that there is no need for a separate on/off switch. The frequencies $f_1$ and $f_2$ can be chosen to provide suitable sensitivity and power consumption. The sensor system can be used to obtain qualitative and quantitative information on a puff.

The signal generator for supplying a pulsed driving signal preferably comprises a microcontroller, the pulsed signal being provided on one output of the microcontroller. If the signal generator comprises a microcontroller, preferably the microcontroller is programmed to control the values of $f_1$ and $f_2$. In other embodiments, the signal generator for supplying a pulsed driving signal may be any type of programmable electronic circuitry.

Preferably, the flow sensor system further comprises a current source arranged to supply a predetermined-value current through the sensing circuit, wherein the pulsed driving signal $S_1$ is supplied to the current source. The predetermined-value current source allows the sensing resistor in the sensing circuit to be used at a constant current, which provides the method of operation having the lowest power consumption. Because the current source is powered via the pulsed driving signal $S_1$, the current source is not powered constantly, but is only powered whenever the pulsed driving signal is high, which further reduces power consumption. The current source reduces the non-linearity of the dependence of the voltage output of the sensing circuit on the resistance of the sensing resistor. In a preferred embodiment, the current source is a temperature-compensated current source. This is advantageous because this eliminates any change in the voltage output of the sensing circuit, if the ambient temperature changes. In one embodiment, the current source comprises a voltage source, two transistors in a mirror configuration, and an input resistor.

Preferably, the flow sensor system further comprises a differential amplifier arranged to amplify the voltage output of the sensing circuit. This is advantageous because the output of the sensing circuit may be only a few mV. The differential amplifier preferably has a low power consumption and a high gain.

Preferably, the differential amplifier can be disabled when the pulsed driving signal $S_1$ is low and can be enabled when the pulsed driving signal $S_1$ is high. This further reduces power consumption. Preferably, the differential amplifier output is proportional to the voltage output of the sensing circuit within a range of values of the voltage output of the sensing circuit, and saturates when the voltage output of the sensing circuit is less than or greater than the range. That is, when the voltage output of the sensing circuit is less than the range, the differential amplifier output has a constant value; when the voltage output of the sensing circuit is greater than the range, the differential amplifier output has a constant value; and when the voltage output of the sensing circuit is within the range, there is a linear relationship between the output of the sensing circuit and the output of the differential amplifier.

Preferably, the sensor system operates in the second mode for a predetermined period of time after a change in the voltage output of the sensing circuit indicative of a puff, has been detected, and operates in the first mode at all other times. Thus, when a puff is detected, or at another time, the pulsed driving signal $S_1$ changes from the first frequency $f_1$ to the higher second frequency $f_2$. This means that the maximum time to puff, when the sensor is operating in the first mode, is $\dfrac{1}{f_1}$ seconds. $f_1$ may be chosen to provide a suitable balance between power consumption and sensitivity in the first mode. If a puff is detected while the sensor is operating in the second mode, the maximum time to puff is $\dfrac{1}{f_2}$ seconds. $f_2$ may be chosen to provide a suitable balance between power consumption and sensitivity in the second mode. In one embodiment, the first frequency $f_1$ is 3 Hz and the second frequency $f_2$ is 22 Hz.

Preferably, the predetermined period of time, in which the sensor operates in the second mode, after detection of a puff, is equal to the mean time between puffs for a particular user. Additionally, the predetermined time may be adaptive, such that it is continuously adjusted based on a running average of the previous times between puffs. Alternatively, the predetermined period of time may have a fixed value.

If the means for supplying the pulsed driving signal $S_1$ comprises a microcontroller, preferably, the voltage output of the sensing circuit is provided to an input of the microcontroller. This may be via the differential amplifier. Then, in one embodiment, when the input to the microcontroller indicates that a puff has been detected, the microcontroller is able to change the pulsed driving signal $S_1$ on its output, from the first frequency $f_1$ to the second frequency $f_2$.

Preferably, a signal $S_2$ is supplied for other components in the aerosol generating system, the signal $S_2$ being high when the voltage output of the sensing circuit indicates a puff is being detected, and the signal $S_2$ being low when the voltage output of the sensing circuit indicates a puff is not being detected. If the means for supplying the pulsed driving signal $S_1$ comprises a microcontroller, preferably the signal $S_2$ is provided on a further output of the microcontroller. Preferably, the voltage output of the sensing circuit is provided to an input of the microcontroller. Then, when the input to the microcontroller indicates that a puff is being detected, the microcontroller is arranged to output a high signal $S_2$, and when the input to the microcontroller indicates that a puff is not being detected, the microcontroller is arranged to output a low signal $S_2$. The other components in the aerosol generating system may include, but are not limited, to an aerolization mechanism (which may be a vaporization mechanism, a vaporization engine, an atomisation mechanism or an atomisation engine), an atomizer, a heating element, and a puff indicator.

The flow sensor system may further comprise means for adjusting the sensitivity of the sensor system, the means for adjusting the sensitivity comprising one or more of: a variable resistor in the sensing circuit; a self adjusting offset circuit; and a signal generator for supplying a pulsed calibration signal $S_C$ to the sensing circuit.

The variable resistor is adjustable to change the sensitivity of the sensor system. Preferably, the sensing resistor has a range of operating resistance (the range having a fixed magnitude) and adjustment of the variable resistor changes the position of the range of operating resistance of the sensing resistor, that is, the low point of the range of operating resistance. This, in turn affects the voltage output of the sensing circuit in the absence of a puff, which affects the sensitivity of the system. In a preferred embodiment, the variable resistor is adjusted such that the sensing resistor range of operating resistance has a low point at or just below zero. This provides the best sensitivity.

The self-adjusting offset circuit may be used to change the sensitivity of the sensor system. The offset circuit may be formed by connecting an output of the microcontroller to the non-inverting input of the differential amplifier and connecting the output of the differential amplifier to an input of the microcontroller. The microcontroller may monitor the output of the differential amplifier $V_{OUT}$ and supply a voltage to the non-inverting input until $V_{OUT} = 0$.

The pulsed calibration signal $S_C$ is usable to adjust the sensitivity of the sensor system. Preferably, at each pulse of the calibration signal $S_C$, the width of each pulse of pulsed driving signal $S_1$ is adjusted. This adjustment is preferably arranged to change the proportion of each pulse of signal $S_1$ during which a change in the voltage output of the sensing circuit indicative of a puff, may be detected. The pulsed calibration signal $S_C$ may be arranged to have a pulse at every x-th pulse of the pulsed driving signal $S_1$, operating at either the first frequency or the second frequency. x is any suitable value, for example 1000. Alternatively, the pulsed calibration signal $S_C$ may be arranged to have a pulse whenever the pulsed driving signal $S_1$ switches from the first frequency to the second frequency, or at other appropriate times. If the means for supplying the pulsed driving signal $S_1$ comprises a microcontroller, preferably the pulsed calibration signal $S_C$ is provided on an output of the microcontroller.

The sensing resistor may be a silicon MEMS based resistor. In another embodiment, the sensing resistor may form part of a silicon MEMS based sensor. The sensor may further comprise a reference resistor.

The sensing circuit may comprise a Wheatstone bridge having a first leg and a second leg and wherein the voltage output is the difference between a voltage across the first leg and a voltage across the second leg.

According to a second aspect of the invention, there is provided an aerosol generating system for receiving an aerosol-forming substrate, the system including a flow sensor system for sensing fluid flow in the aerosol generating system indicative of a puff, the flow sensor system being according to the first aspect of the invention.

The aerosol generating system may be an electrically heated aerosol generating system. The aerosol generating system may be a smoking system. Preferably, the system is portable. Preferably, the system comprises a housing for receiving the aerosol-forming substrate and designed to be grasped by a user.

The aerosol-forming substrate may comprise a tobacco-containing material comprising volatile tobacco flavour compounds which are released from the substrate upon heating. The aerosol-forming substrate may further comprise an aerosol former. The aerosol-forming substrate may be a solid substrate, a liquid substrate, a gas substrate, or a combination of two or more of a solid, a liquid and a gas.

If the aerosol-forming substrate is a liquid substrate, the aerosol generating system may comprise an aerolization mechanism in contact with the liquid substrate source. The aerolization mechanism may comprise at least one heating element for heating the substrate to form the aerosol; wherein the heating element may be activated when the aerosol generating system senses fluid flow indicative of a puff. Alternatively, the heating element may be separate from but in communication with the aerolization mechanism. The at least one heating element may comprise a single heating element or more than one heating element. The heating element or elements may take any suitable form in order to most effectively heat the aerosol-forming substrate. The heating element preferably comprises an electrically resistive material.

The aerolization mechanism may include one or more electromechanical elements such as piezoelectric elements. The aerolization mechanism may include elements that use electrostatic, electromagnetic or pneumatic effects. The aerosol generating system may comprise a condensation chamber.

During operation, the substrate may be completely contained within the aerosol generating system. In that case, a user may puff on a mouthpiece of the aerosol generating system. Alternatively, during operation, the substrate may be partially contained within the aerosol generating system. In that case, the substrate may form part of a separate article and the user may puff directly on the separate article.

The aerosol generating system may comprise a power supply. The power supply may be a Lithium-ion battery or one of its variants for example, a Lithium-ion polymer battery, or a Nickel-metal hydride battery, a Nickel cadmium battery, a super capacitor, or a fuel cell. In an alternative embodiment, the aerosol generating system may comprise circuitry chargeable by an external charging portion and arranged to provide power for a predetermined number of puffs.

According to a third aspect of the invention, there is provided a method for driving a flow sensor system for sensing fluid flow indicative of a puff in an aerosol generating system, the method comprising the steps of: supplying a pulsed driving signal $S_1$ to a sensing circuit including a sensing resistor and a voltage output, the sensing resistor being arranged to detect fluid flow based on a change in resistance of the sensing resistor, the sensing circuit being arranged such that the change in resistance of the sensing resistor causes a change in the voltage output; and switching the sensor system between first and second modes of operation, wherein the pulsed driving signal $S_1$ has a first frequency $f_1$, in the first mode, and has a second frequency $f_2$, greater than the first frequency $f_1$, in the second mode.

Driving the flow sensor system with a pulsed driving signal $S_1$ means that the sensing circuit is not powered continuously, but is only powered when $S_1$ is high. This significantly reduces power consumption while $f_1$ and $f_2$ can be chosen for a suitable sensitivity.

In one embodiment, the step of switching the sensor system between first and second modes of operation comprises switching the sensor system from the first mode wherein the pulsed driving signal $S_1$ has a first frequency $f_1$ to the second mode wherein the pulsed driving signal $S_1$ has a second frequency $f_2$, when a puff is detected. The puff is detected by a change in the voltage output of the sensing circuit. Alternatively, or in addition, the step of switching the sensor system between first and second modes of operation comprises switching the sensor system from the first mode wherein the pulsed driving signal $S_1$ has a first frequency $f_1$ to the second mode wherein the pulsed driving signal $S_1$

has a second frequency $f_2$, when a puff is expected, based on user habits. The time at which a puff is expected may be predicted based on user habits. For example, the sensor system may be switched from the first mode to the second mode, one or more of: a predetermined period of time after the preceding puff and a predetermined time of day. The predetermined period of time may be the mean time between puffs for the user, and this may be adaptive so that it is continuously adjusted based on a running average of the time between puffs. Alternatively, the predetermined period of time may have a fixed value. This is advantageous because, if the sensor system is operating in the second mode before a puff, the response time will be much shorter.

Preferably, the method comprises supplying the pulsed driving signal $S_1$ at the second frequency $f_2$ for a predetermined period of time after a change in the voltage output of the sensing circuit indicative of a puff has been detected, and supplying the pulsed driving signal $S_1$ at the first frequency $f_1$ at all other times.

Preferably, the method further comprises the step of supplying a signal $S_2$ to other components in the aerosol generating system, the signal $S_2$ being high when the voltage output of the sensing circuit indicates a puff is being detected, and the signal $S_2$ being low when the voltage output of the sensing circuit indicates a puff is not being detected. Signal $S_2$ may be used to activate one or more of: an aerolization mechanism, an atomizer, a heating element and a puff indicator.

The method may further comprise the step of adjusting the sensitivity of the sensor system, comprising one or more of: periodically adjusting the resistance of a variable resistor in the sensing circuit; providing a self-adjusting offset circuit; and supplying a pulsed calibration signal $S_C$ to the sensing circuit.

The method may further comprise the step of delivering an aerosol to a user in dependence upon characteristics of a puff detected by the sensing circuit. Features described in relation to one aspect of the invention may also be applicable to another aspect of the invention.

The invention will be further described, by way of example only, with reference to the accompanying drawings, in which:

Figure 1      shows an exemplary embodiment of a sensor system according to the invention;
Figure 2a    shows signal GP2 of Figure 1;
Figure 2b    shows signal $V_{OUT}$ of Figure 1 in the absence of a puff;
Figure 2c    shows signal $V_{OUT}$ of Figure 1 when a puff is detected;
Figure 3      shows an alternative arrangement for the sensing circuit of Figure 1, in the form of a Wheatstone bridge;
Figure 4      shows how the relaxation setting point may be established; and
Figure 5      shows one method of operation of the Figure 1 sensor system.

A suitable sensor for use in the sensor system of the present invention may comprise a silicon substrate, a silicon nitride membrane on the substrate, and two platinum heating elements on the membrane. The two heating elements are resistors, one acting simultaneously as an actuator and as a sensor, the other as a reference. Such a sensor is advantageous since it provides a quick sensor response. Other suitable sensors could, of course, be used. During operation, there is a change in resistance of the sensing resistor due to cooling by an adjacent fluid flow. This change in resistance is due to the thermal losses.

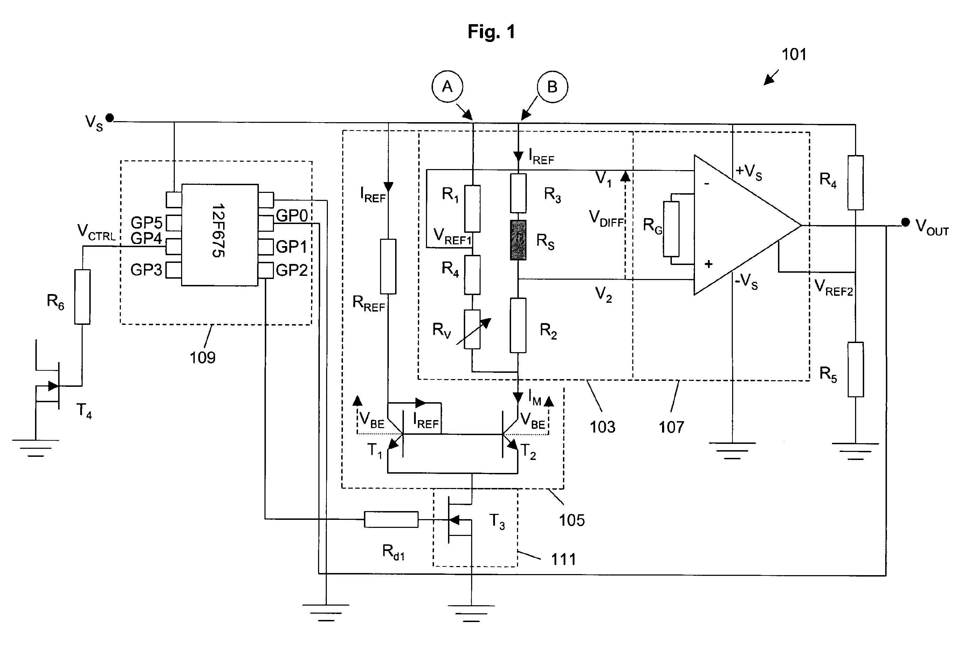

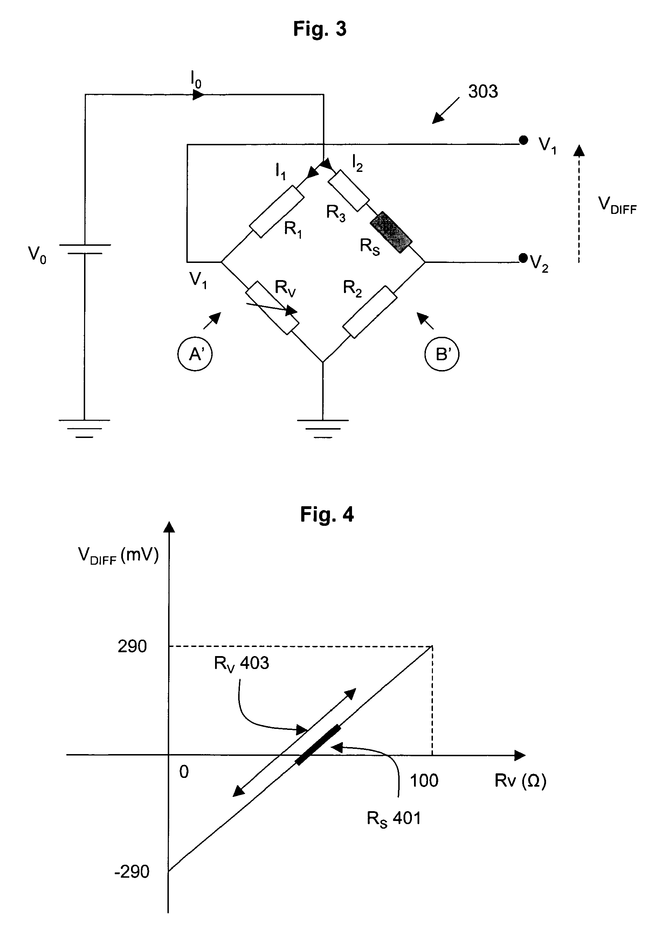

The sensing resistor may be used at a constant temperature, in which case the increased required heating power is measured and provides an indication of the fluid flow. Alternatively, the sensing resistor may be used at a constant heating power, in which case the decreased temperature provides the indication of the fluid flow. Alternatively, the sensing resistor may be used with a constant current, as will be described below, with reference to Figures 1 and 3, in which case the change in equilibrium of a sensing circuit provides the indication of the fluid flow.

Figure 1 shows an exemplary embodiment of a sensor system according to the invention. The sensor system 101 of Figure 1 includes a sensing circuit 103, a predetermined-value current source in the form of a current mirror 105, a differential amplifier 107, and a signal generator for supplying a pulsed driving signal $S_1$ in the form of a microcontroller 109 and a driving transistor 111.

The sensor system 101 of Figure 1 includes sensing circuit103. The sensing circuit103 includes resistors $R_1$, $R_4$ and variable resistor $R_V$ in the left hand branch and resistors $R_2$, $R_3$ and sensing resistor $R_S$ in the right hand branch. The sensing resistor $R_S$ is the sensing resistor of a sensor like that described above, or of another suitable type of sensor. $R_V$ is an adjustable resistance and may be used for establishing the relaxation setting point (for example, when there is no air flow in the system), as will be discussed further below. Alternatively, a self-adjusting offset circuit may be used to establish the relaxation setting point. In this embodiment, an output of the microcontroller may be connected to the non-inverting input of the differential amplifier (not shown in Figure 1) and $V_{OUT}$ of the differential amplifier may be connected to an input of the microcontroller. The microcontroller may be used to monitor the output of the differential amplifier $V_{OUT}$ and inject a voltage on the non-inverting input of the differential amplifier until $V_{OUT} = 0$.

The voltage measured $V_{DIFF}$ is a difference measurement (in this exemplary case, the difference between $V_2$

in the right hand branch B and $V_1$ in the left hand branch A). When the sensing circuit103 is in equilibrium, the ratio of resistances in the left hand branch, $\dfrac{R_1}{R_V + R_4}$ is equal to the ratio of resistances in the right hand branch, $\dfrac{R_3 + R_S}{R_2}$

which results in $V_{DIFF} = V_2 - V_1$ being equal to zero. As soon as $R_S$ is cooled by fluid flow, there is a change in resistance of $R_S$, which results in a change in the voltage of the right hand branch B and a non-zero value for $V_{DIFF}$.

It can easily be shown that, for the sensing circuit 103 of Figure 1:

$$V_{DIFF} = V_2 - V_1 = Vs\left(\frac{R_2}{R_S + R_3 + R_2} - \frac{R_V + R_4}{R_V + R_4 + R_1}\right) \qquad (1)$$

if $R_V + R_4 = R_1$ and $R_S + R_3 = R_2$ then

$$V_{DIFF} = V_2 - V_1 = Vs\left(\frac{1}{2} - \frac{1}{2}\right) = 0$$

The difference measurement $V_{DIFF}$, provides an indication of the fluid flow that causes a change in the resistance of $R_S$. Because $V_{DIFF}$ is a difference measurement, very accurate measurements can be taken, even for a small change in fluid flow and hence resistance. The configuration allows information, such as puff volume and intensity, to be recorded. Note, from Equation (1), that $V_{DIFF}$ is not linearly dependent on the sensing resistance $R_S$.

In the Figure 1 embodiment, the predetermined-value current source is in the form of a current mirror 105, which comprises two transistors $T_1$ and $T_2$ in a mirror configuration, plus a resistor $R_{REF}$. The current $I_M$ at $T_2$ must be equal to $I_{REF}$ at $T_1$ (which is also the current passing through the sensing circuit 103). And:

$$V_S = R_{REF} I_{REF} + V_{BE}$$

Therefore:

$$I_M = I_{REF} = \frac{V_0 - V_{BE}}{R_{REF}} \qquad (2)$$

Non-linearity in the sensing circuit (see Equations (1) and (2) above) is compensated by the current mirror. This is advantageous because, in a system which is compensated for non-linearity in this way, the non-linearity is found to be two times less than the non-linearity in a system compensated by voltage variation. Thus, the current mirror 105 in the Figure 1 embodiment reduces the non-linearity of the system.

The current mirror 105 may have any suitable configuration. The current mirror may be placed on the high voltage side of the sensing circuit 103 rather than between the sensing circuit and ground as shown in Figure 1. Any suitable transistor types could be used for $T_1$ and $T_2$, including PNP transistors, NPN transistors and CMOS transistors. Alternative arrangements for the current source are also possible. The sensor system must operate correctly in a reasonable temperature range, and the current mirror 105 compensates for any temperature change. Other temperature-compensated current sources are also available. If the external temperature changes, the output voltage of the sensing circuit, $V_{DIFF}$, will be affected which might cause inaccurate operation or measurements. $T_1$ and $T_2$ should have the same electrical characteristics and be placed close together and in similar packaging in order to minimise any temperature difference between them.

Referring to the particular arrangement of current mirror 105, on the one hand, if there is a temperature difference between $T_1$ and $T_2$, because the two transistors have the same potential across their base-emitter junctions ($V_{BE}$), $V_{BE}$

is maintained constant. This means that, if the two transistors are at different temperatures, the current through $T_1$ is different from the current through $T_2$, so as to maintain $V_{BE}$. On the other hand, if the external temperature changes so as to affect $T_1$ and $T_2$ equally, the current through both transistors changes equally in order to maintain $V_{BE}$ constant.

The sensor system 101 also includes a differential amplifier 107 at the output of the sensing circuit 103, in order to amplify the output voltage $V_{DIFF}$, which is typically only a few millivolts. In Figure 1, an AD623 amplifier, made by Analog Devices, Inc of Massachusetts, USA is used. Such an amplifier uses less than 0.5 mA and has a gain of up to 1000. However, any suitable differential amplifier could be substituted. The amplifier 107 is connected to a supply voltage $V_S$, and the gain of the amplifier is set by the resistor $R_G$, according to:

$$V_{OUT} = \left\{1 + \frac{100000}{R_G}\right\} V_{DIFF} \tag{3}$$

So, for a gain of $\approx$1000, $R_G$ is set to 100 $\Omega$.

Equation **(3)** applies only across a particular range of $V_{DIFF}$. Either side of this range, the amplifier will saturate. In one example, if $V_{DIFF} = 0$ V, $V_{OUT} = 1.5$ V. If $V_{DIFF} < -1.5$ mV, $V_{OUT}$ saturates at 0 V. If $V_{DIFF} > +1.5$ mV, $V_{OUT}$ saturates at 3 V. Within the range -1.5 mV $< V_{DIFF} < +1.5$ mV, Equation **(3)** applies, that is, the relationship is linear with a gradient equal to the gain, which is around 1000, if $R_G$ is set to 100 $\Omega$.

The sensor system 101 also includes microcontroller 109 and driving transistor 111. In one embodiment, the microcontroller has input GP0 and outputs GP2 and GP4. The sensing circuit 103 and the current mirror 105 are the highest power consumers in Figure 1. In order to reduce the power consumption, the sensing circuit 103 and the current mirror 105 are not powered continuously, but rather are driven by a pulsed driving signal $S_1$ from microcontroller 109. The pulsed current $I_{REF}$ is supplied to the current mirror 105 and sensing circuit 103 in accordance with signal $S_1$ on output GP2 of the microcontroller 109, via the driving transistor 111. The driving transistor 111 behaves as a switch, conducting when the GP2 signal is high. The width and frequency of the pulse is controlled by the microcontroller 109. In this embodiment, the output $V_{OUT}$ is connected to input GP0 of the microcontroller in order to digitize the differential amplifier output. The output GP0 is observed and the width and frequency of the pulsed signal at GP2 can be adjusted accordingly. In the embodiment of Figure 1, the microcontroller 109 is a PIC12f675 series CMOS Flash-based 8 bit microcontroller made by Microchip Technology, Inc of Arizona, USA. The microcontroller has a supply port, a ground port and six Input/Output (I/O) ports GP0 to GP5, including four Analogue to Digital conversion ports. It can function at 3 V. Of course, any suitable microcontroller could be used.

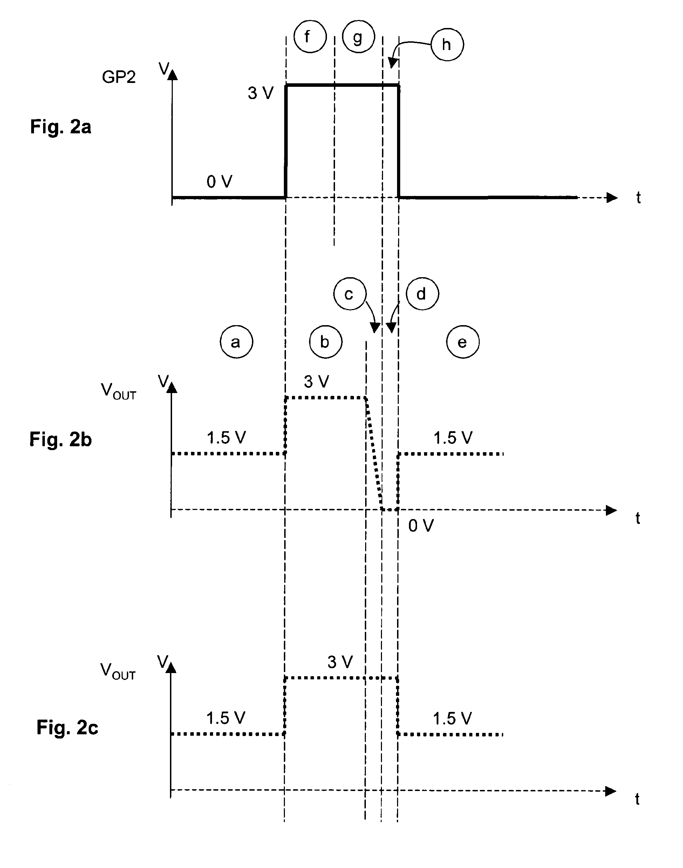

Figure 2a shows one pulse of the square wave signal at microcontroller output GP2 (signal $S_1$). Figure 2b shows how the GP2 signal affects the signal at $V_{OUT}$ in the absence of a puff. Figure 2a shows voltage against time for GP2. Figure 2b shows voltage against time for $V_{OUT}$. The graphs of Figures 2a and 2b are not to scale. Each pulse of the signal at GP2 in Figure 2a is split into three phases marked f, g and h in Figure 2a. These phases will be discussed below. The signal at $V_{OUT}$ in Figure 2b is split into five phases, marked a, b, c, d and e in Figure 2b.

In phase a, the GP2 signal is 0 V. This is before a pulse. Therefore, no current is supplied to the sensing circuit 103. The sensing resistor $R_S$ has no current flowing through it, so it is at ambient temperature. The output of the sensing circuit 103, $V_{DIFF}$ is 0 V which produces an output $V_{OUT}$ of 1.5 V, as discussed above.

In phase b, the GP2 signal is 3 V. Current is now supplied to the sensing circuit 103 which means that the temperature of $R_S$ begins to increase. The output $V_{DIFF}$ of the sensing circuit 103 increases to greater than 1.5 mV, which means that the amplifier output $V_{OUT}$ saturates at 3 V.

In phase c, the temperature of $R_S$ continues to rise and this begins to decrease the output of the sensing circuit 103. $V_{DIFF}$ falls to below the saturation level of 1.5 mV so that a linear response is obtained from the amplifier output $V_{OUT}$. So, $V_{OUT}$ falls off linearly with $V_{DIFF}$ as the $R_S$ temperature rises.

In phase d, the temperature of $R_S$ has risen sufficiently that $V_{DIFF}$ is less than -1.5 mV and the amplifier output $V_{OUT}$ again saturates, this time at 0V.

In phase e, the pulse on GP2 has ended so the GP2 voltage is again at 0 V. Current is no longer supplied to the sensing circuit 103, which means that the output $V_{DIFF}$ is 0 V which produces an output $V_{OUT}$ of 1.5 V, just as in phase a. $R_S$ decreases in temperature in advance of the next pulse.

In this system, a puff can be detected during phase c of $V_{OUT}$, that is, during the linear response of the differential amplifier. In a conventional arrangement, the sensing circuit 103 is set such that its equilibrium $V_{DIFF} = 0$ is reached when the sensor heater resistance has reached a constant temperature at zero flow. With a constant current, this means supplying current to the sensor for long enough for the sensor heater resistance to reach the equilibrium temperature. This means high power consumption of the sensor. In this embodiment of the invention, power consumption is reduced by setting the pulses so that the heater resistance is not, or is only just, able to reach its equilibrium temperature.

Figure 2c shows the signal at $V_{OUT}$, when a puff is detected. Figure 2c shows voltage against time for $V_{OUT}$. Again, the graph of Figure 2c is not to scale. When a puff is taken, the resulting fluid flow causes the $V_{OUT}$ slope (phase c) to move to the right. The amount of shift of the slope is proportional to the flow velocity. As the slope shifts to the right, this ultimately gives the $V_{OUT}$ signal the same form as the GP2 drive signal shown in Figure 2a. This is shown in Figure 2c. The GP2 signal goes to zero before or at the same time as the phase c slope begins. The puff is detected just before the end of the GP2 pulse. If the $V_{OUT}$ signal is digitized (via GP0), if its value is above a threshold value, then a puff is deemed detected. So, it is important that, without any fluid flow and before the measurement, $V_{OUT}$ is 0 V.

Figure 3 shows an alternative arrangement for the sensing circuit 103, in the form of a quarter Wheatstone bridge configuration 303 including sensing resistor $R_S$. The four sides of the Wheatstone bridge include resistors $R_1$, $R_V$ (in the left leg A'), $R_2$ and $(R_3 + R_S)$ (in the right leg B') respectively. Again, $R_V$ is an adjustable resistance and is used for establishing the setting point of the Wheatstone bridge. The bridge arrangement is advantageous because it allows small variations in the sensor resistance to be detected. Additionally, this arrangement reduces variations caused by changes in the ambient temperature.

Figure 4 shows how variable resistance $R_V$ or a self-adjusting offset circuit may be used to establish the relaxation setting point of the sensing circuit 103 or Wheatstone bridge 303 and adjust the sensitivity of the sensor system. As described with reference to phases b, c and d of Figure 2b, the sensor resistance $R_S$ rises when powered up, to a value determined by the pulse width of the signal GP2 generated by microcontroller 109. $R_V$ or the self-adjusting offset circuit can be used to determine at which voltage level this variation in $R_S$ occurs and this is illustrated in Figure 4.

The range of values that $R_S$ can take, with the change in temperature, is shown in Figure 4 at range 401. The impact of the $R_V$ adjustment or use of the self-adjusting offset circuit is to move range 401 along the diagonal line, as indicated by arrow 403. The relaxation setting point is the point at which the voltage variation of $R_S$ is placed. The movement of the range 401 of $R_S$ along the diagonal line in Figure 4 corresponds to movement of the slope of phase c of $V_{OUT}$ in Figure 2b to the left or right. The best sensitivity is achieved when the range 401 begins at or just below zero in Figure 4, which corresponds to the $V_{OUT}$ phase c slope being positioned at or just before the end of the GP2 pulse in Figure 2b.

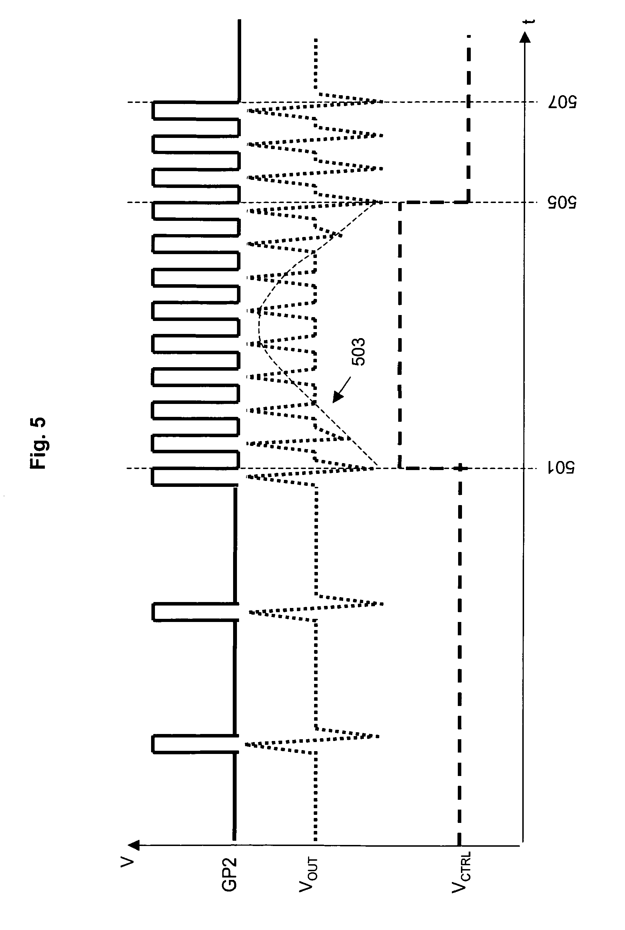

Figure 5 shows one embodiment of the method of operation of the Figure 1 arrangement. The upper third of Figure 5 shows voltage against time for GP2 (signal $S_1$). The centre third of Figure 5 shows voltage against time for $V_{OUT}$ (corresponding to GP0). The lower third of Figure 5 shows voltage against time for the microcontroller output $V_{CTRL}$ (corresponding to signal $S_2$ on GP4). The graphs of Figure 5 are not to scale. As already discussed, to minimise power consumption, the sensing circuit 103 or Wheatstone bridge 303 and current mirror 105 are powered with a pulsed driving signal $S_1$ at GP2. One square pulse of GP2 is shown in Figure 2a. The left hand side of Figure 5 shows the signal operating in a first mode. The right hand side of Figure 5 shows the signal operating in a second mode.

The left hand side of Figure 5 shows the method of operation when a puff is not detected, and the signal is operating in a first mode. The pulse frequency, whilst the signal is operating in a first mode, in this embodiment is 3Hz, that is, a pulse approximately every 330 ms. This frequency provides a good compromise between sensitivity and power consumption. The pulse width of GP2 is 12.1 ms in this embodiment. Accordingly, the voltage $V_{OUT}$ has the form shown in the left hand side of Figure 5. Note that each pulse of $V_{OUT}$ in the lower half of the left hand side of Figure 5 has the shape shown in Figure 2b, but the pulse shape is shown only schematically in Figure 5. In the left hand side of Figure 5, no puff has been detected so the pulse shape is like that shown in Figure 2b, rather than that shown in Figure 2c.

The right hand side of Figure 5 shows the method of operation when a puff is detected and the signal is operating in a second mode. The puff is detected at time 501. As can be seen in the centre third of the right hand side of Figure 5, the puff is detected because the lower portion of the $V_{OUT}$ pulse (bottom of the phase c slope) has a higher value. This corresponds to fluid flow moving the slope in phase c to the right, so that the slope is cut off before reaching phase d, by the GP2 signal returning to 0 V. When a puff is detected at time 501, the detection on input GP0 switches the GP4 output signal $S_2$ from 0 to 1, so that $V_{CTRL}$ is switched on, as shown in the lower third of the right hand side of Figure 5. The detection on input GP0 also causes a change in the pulse frequency of GP2 and the system begins to operate in a second mode. Of course, the GP4 signal change can also be used to control other circuits, for example an aerolization mechanism, an atomizer, a heating element and a puff indicator. Now, in this embodiment, the pulse frequency of GP2 in the second mode, is 22 Hz, that is, a pulse approximately every 45 ms, as shown in the upper third of the right hand side of Figure 5. Note that the pulse width remains the same as in the first mode, that is, in this embodiment 12.1 ms. Note that the lower portion of the $V_{OUT}$ signal follows the dotted curve marked 503. This curve is the puff profile, since the amount the slope of $V_{OUT}$ moves to the right is proportional to the flow velocity. As the lower portion of the $V_{OUT}$ signal increases, the flow velocity is increasing from zero to its maximum and, as the lower portion of the $V_{OUT}$ signal decreases from its maximum to zero, the flow velocity is decreasing from the maximum to zero.

In this embodiment, the system has been properly calibrated; this can be seen from the curve 503, which just approaches but does not exceed the high value of $V_{OUT}$. This is equivalent to the range of $R_S$ 401 in Figure 4 beginning at or just below zero and the $V_{OUT}$ phase c slope being positioned at or just before the end of the GP2 pulse. This calibration can be achieved by variation of $R_V$ or the offset circuit, as discussed above with reference to Figure 4, or by an alternative calibration method, which will be discussed below.

At time 505, when no change is again detected at $V_{OUT}$, the output $V_{CTRL}$ returns to 0 V. The GP2 pulse remains at the second frequency of 22 Hz for a predetermined period of time after the puff is detected at time 501 until time 507, when it returns to the first frequency of 3 Hz. This time period 501 to 507 can either be preset or based on user habits. For example, the time period could correspond to the mean time period between two puffs.

Thus, during the first mode, when the GP2 pulse frequency is 3 Hz, in the worst case scenario, the time to first puff is approximately 330 ms. If a puff is taken during the second mode, when the GP2 pulse frequency is 22 Hz, the maximum response time is much faster, and in the worst case scenario, the time to puff is approximately 45 ms.

The $V_{OUT}$ signal, which represents the puff, may be recorded and may be used to ascertain various data. For example, the mean entire time for a puff can be recorded from the $V_{OUT}$ signal. This is the time 501 to 505 in Figure 5. Also, the slope of the curve 503 can be used to calculate the force or intensity with which the user is taking the draw. Also, the puff volume can be determined from the puff profile 503 across time 501 to 505. Also, the mean time between puffs can be recorded from the $V_{OUT}$ signal (although note that only one puff is shown in Figure 5, for simplicity).

This information can be fed into the microcontroller, and this allows a large amount of flexibility in the operation. For example, from the recorded time between puffs, the microcontroller may adapt the time period during which GP2 remains at the high frequency (501 to 507) in accordance with the user's habits. As a further example, the microcontroller could switch automatically from the low frequency GP2 pulse to the high frequency GP2 pulse, at a time when the next puff is expected, based on user habits. This will decrease the response time, that is, the time to puff. As a further example, the force with which the user takes a draw can be recorded, and used to manage the aerosol delivery, for example, at the actuator, aerolization mechanism or heating element, to suit the user.

The method of operation shown in Figure 5 can be implemented by the microcontroller software. First, the software powers on and initializes the microcontroller. Next, the software performs electronic stabilization. Once these processes have been completed, the microcontroller may be used to generate pulses on GP2 and read the response at $V_{OUT}$. If $V_{OUT}$ is not greater than 0.1 V, a puff was not detected, in which case the GP2 signal $S_1$ is set at a first pulse frequency, in this case 3 Hz. The microcontroller continues to generate pulses with the first pulse frequency and read the response at $V_{OUT}$ until a puff is detected.

If $V_{OUT}$ is greater than 0.1 V, a puff was detected, in which case a countdown timer is started. This corresponds to time 501 in Figure 5. The microcontroller output $V_{CTRL}$ to GP4 ($S_2$) is set to high and the GP2 signal is set at a second pulse frequency, in this case 22 Hz. The microcontroller generates pulses at the second frequency on GP2 and reads the response at $V_{OUT}$. If $V_{OUT}$ is greater than 0.1 V, the puff still being detected, in which case the GP2 pulse $S_1$ is still pulsed at the second frequency and the microcontroller output $V_{CTRL}$ to GP4 ($S_2$) remains high.

If $V_{OUT}$ is not greater than 0.1 V, a puff is no longer being detected. This corresponds to time 505 in Figure 5. In that case, $V_{CTRL}$ is set to low. Then, if the countdown timer is non-zero, the time period during which the GP2 pulse should remain at the high frequency has not yet expired, that is the time 507 in Figure 5 has not yet been reached. In that case, the GP2 pulsed signal $S_1$ remains at the high frequency.

If the countdown timer is zero, the time period during which the GP2 pulse should remain at the high frequency has expired, that is, the time 507 in Figure 5 has been reached. In that case, the GP2 pulsed signal $S_1$ returns to the first low frequency.

As discussed above, the sensitivity of the system may be set by adjusting $R_V$ or injecting voltage into the non-inverting input of the differential amplifier until the output of the amplifier $V_{OUT}$ is 0 V. Another way is to use a calibration signal $S_C$. A pulse on calibration signal $S_C$ may be generated periodically, for example every x pulses (for example 1000 pulses) of signal $S_1$ on GP2, or whenever the GP2 signal changes from the second mode (22 Hz) to the first mode (3 Hz). Referring to Figure 2a once again, the calibration pulse is used to maintain a constant time period for phase d, that is, when $V_{OUT}$ is 0 V. If a calibration pulse is used, the pulse width of GP2 is no longer fixed, but is variable. The GP2 pulse is divided into three phases, f, g and h as shown in Figure 2a. During calibration, in phase f, which has a fixed time duration (in one embodiment 6 ms), the GP2 signal is maintained high at 3 V, irrespective of the $V_{OUT}$ signal. In phase g, the $V_{OUT}$ signal is monitored and, as long as $V_{OUT}$ remains greater than 0 V (so is either in phase b or c - see Figure 2b), the GP2 signal is maintained high at 3 V. As soon as the $V_{OUT}$ signal reaches 0 V (phase d - see Figure 2b), the time is recorded and the time period for phase h of GP2 , which corresponds to phase d of $V_{OUT}$, is set at a fixed time duration (in one embodiment 300 $\mu$s). During calibration, in this embodiment, if $V_{OUT}$ does not reach 0 V after a total pulse time (f + g + h) of 14 ms, a puff is deemed to be detected.

In normal operating mode, the total pulse width of GP2 is f + g + h. The time g that was recorded during calibration is now used for calculation of the total pulse length. This method of calibrating the system to set the sensitivity is very advantageous for the following reasons. Firstly, the adjustable resistance $R_V$ can be replaced by a fixed resistance. Secondly, automatic calibration occurs whenever the pulsed calibration signal $S_C$ has a pulse. This means that there is no need to manually adjust any of the components in the system, either during manufacture or during maintenance, as the system will adjust itself automatically to the best sensitivity. The time window selected in this embodiment, from 6 ms to 14 ms, is large enough to allow for any variation in ambient temperature and response of the various electronic components, but any suitable time window could be selected.

## Claims

1. A flow sensor system for sensing fluid flow indicative of a puff in an aerosol generating system, the sensor system comprising:

   a sensing circuit comprising a sensing resistor and a voltage output, the sensing resistor being arranged to detect fluid flow based on a change in resistance, the sensing circuit being arranged such that the change in resistance of the sensing resistor causes a change in the voltage output; and
   a signal generator for supplying a pulsed driving signal $S_1$ to the sensing circuit,

   wherein the sensor system is arranged to operate in a first mode in which the pulsed driving signal $S_1$ has a first frequency $f_1$, and a second mode in which the pulsed driving signal $S_1$ has a second frequency $f_2$, greater than the first frequency $f_1$.

2. A flow sensor system according to claim 1, further comprising a current source arranged to supply a predetermined-value current through the sensing circuit, wherein the pulsed driving signal $S_1$ is supplied to the current source.

3. A flow sensor system according to claim 1 or claim 2, further comprising a differential amplifier arranged to amplify the voltage output of the sensing circuit.

4. A flow sensor system according to claim 3 wherein the differential amplifier output is proportional to the voltage output of the sensing circuit within a range of values of the voltage output of the sensing circuit, and saturates when the voltage output of the sensing circuit is less than or greater than the range.

5. A flow sensor system according to any preceding claim, further comprising means for adjusting the sensitivity of the sensor system, the means for adjusting the sensitivity comprising one or more of:

   a variable resistor in the sensing circuit;
   a self adjusting offset circuit; and
   a signal generator for supplying a pulsed calibration signal $S_C$ to the sensing circuit.

6. A flow sensor system according to any preceding claim wherein the sensing circuit comprises a Wheatstone bridge having a first leg and a second leg and wherein the voltage output is the difference between a voltage across the first leg and a voltage across the second leg.

7. An aerosol generating system for receiving an aerosol-forming substrate, the system including a flow sensor system for sensing fluid flow in the aerosol generating system indicative of a puff, the flow sensor system being according to any preceding claim.

8. An aerosol generating system according to claim 7, further comprising:

   at least one heating element for heating the substrate to form an aerosol;

   wherein the flow sensor system is arranged to activate the heating element when the flow sensor system senses fluid flow indicative of a puff.

9. A method for driving a flow sensor system for sensing fluid flow indicative of a puff in an aerosol generating system, the method comprising the steps of:

   supplying a pulsed driving signal $S_1$ to a sensing circuit including a sensing resistor and a voltage output, the sensing resistor being arranged to detect fluid flow based on a change in resistance of the sensing resistor, the sensing circuit being arranged such that the change in resistance of the sensing resistor causes a change in the voltage output; and
   switching the sensor system between first and second modes of operation, wherein the pulsed driving signal

$S_1$ has a first frequency $f_1$, in the first mode, and has a second frequency $f_2$, greater than the first frequency $f_1$, in the second mode.

10. A method according to claim 9, wherein the step of switching the sensor system between first and second modes of operation comprises switching the sensor system from the first mode wherein the pulsed driving signal $S_1$ has a first frequency $f_1$ to the second mode wherein the pulsed driving signal $S_1$ has a second frequency $f_2$, when a puff is detected.

11. A method according to claim 9 or claim 10, wherein the step of switching the sensor system between first and second modes of operation comprises switching the sensor system from the first mode wherein the pulsed driving signal $S_1$ has a first frequency $f_1$ to the second mode wherein the pulsed driving signal $S_1$ has a second frequency $f_2$, when a puff is expected, based on user habits.

12. A method according to any one of claims 9 to 11, further comprising the step of supplying a signal $S_2$ to other components in the aerosol generating system, the signal $S_2$ being high when the voltage output of the sensing circuit indicates a puff is being detected, and the signal $S_2$ being low when the voltage output of the sensing circuit indicates a puff is not being detected.

13. A method according to any of claims 9 to 12, further comprising the step of adjusting the sensitivity of the sensor system, comprising one or more of:

   periodically adjusting the resistance of a variable resistor in the sensing circuit;
   providing a self-adjusting offset circuit; and
   supplying a pulsed calibration signal $S_C$ to the sensing circuit.

14. A method according to any of claims 9 to 13 further comprising the step of delivering an aerosol to a user in dependence upon characteristics of a puff detected by the sensing circuit.

Fig. 1

Fig. 2a

Fig. 2b

Fig. 2c

## Fig. 3

## Fig. 4

Fig. 5

EP 2 143 346 A1

# EP 2 143 346 A1

Europäisches
Patentamt
European
Patent Office
Office européen
des brevets

## EUROPEAN SEARCH REPORT

Application Number

EP 08 25 2328

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/20132 A (PHILIP MORRIS PROD [US]) 29 April 1999 (1999-04-29) | 1-14 | INV. A24F13/00 A24F47/00 G01F1/69 |
| Y | * the whole document * | 1-14 | |
| X | US 4 587 842 A (HANDTMANN DIETER [DE]) 13 May 1986 (1986-05-13) * column 5 - column 7; figure 3 * | 1,7,9 | |
| Y | US 5 388 594 A (COUNTS MARY E [US] ET AL) 14 February 1995 (1995-02-14) * the whole document * | 1-14 | |
| Y | EP 1 083 411 A (HITACHI LTD [JP]) 14 March 2001 (2001-03-14) * column 3 - column 7; figures 1,3,5a,5b * | 1,7,9 | |
| A | US 2004/089314 A1 (FELTER JOHN LOUIS [US] ET AL) 13 May 2004 (2004-05-13) * paragraph [0035] * | 1-14 | |

TECHNICAL FIELDS SEARCHED (IPC)

G01F
A24F

The present search report has been drawn up for all claims

| Place of search | Date of completion of the search | Examiner |
|---|---|---|
| Munich | 11 December 2008 | Fenzl, Birgit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 08 25 2328

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2008

| Patent document cited in search report | | Publication date | Patent family member(s) | | Publication date |
|---|---|---|---|---|---|
| WO 9920132 | A | 29-04-1999 | AU | 9774098 A | 10-05-1999 |
| | | | US | 5967148 A | 19-10-1999 |
| US 4587842 | A | 13-05-1986 | DE | 3248603 A1 | 12-07-1984 |
| | | | FR | 2538898 A1 | 06-07-1984 |
| | | | GB | 2132775 A | 11-07-1984 |
| | | | GB | 2135062 A | 22-08-1984 |
| | | | JP | 59136620 A | 06-08-1984 |
| US 5388594 | A | 14-02-1995 | US | 5865185 A | 02-02-1999 |
| | | | US | 5613504 A | 25-03-1997 |
| EP 1083411 | A | 14-03-2001 | JP | 2001124608 A | 11-05-2001 |
| | | | US | 6453739 B1 | 24-09-2002 |
| US 2004089314 | A1 | 13-05-2004 | AU | 2003290670 A1 | 03-06-2004 |
| | | | BR | 0316088 A | 27-09-2005 |
| | | | CN | 1717186 A | 04-01-2006 |
| | | | EP | 1558098 A1 | 03-08-2005 |
| | | | JP | 2006505281 T | 16-02-2006 |
| | | | KR | 20050084650 A | 26-08-2005 |
| | | | MX | PA05004936 A | 18-08-2005 |
| | | | WO | 2004043175 A1 | 27-05-2004 |
| | | | US | 2004200488 A1 | 14-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5060671 A
- US 5388594 A
- US 5505214 A
- US 5591368 A
- WO 2004043175 A
- EP 0358002 A
- EP 0295122 A
- EP 1618803 A
- EP 1736065 A
- WO 2007131449 A